# EUROPEAN PATENT SPECIFICATION

(11) **EP 2 536 007 B1**
(45) Date of publication and mention of the grant of the patent: **13.11.2019**
(21) Application number: 11169779.3
(22) Date of filing: 14.06.2011
(51) Int. Cl.: H02K 15/00, H02K 15/03

(54) **Method for exchanging segments in an electric machine**
Verfahren zum Austauschen von Segmenten in einer elektrischen Maschine
Procédé pour échanger des segments dans une machine électrique

(43) Date of publication of application: 19.12.2012
(73) Proprietor: Siemens Gamesa Renewable Energy A/S, 7330 Brande (DK)
(72) Inventor: Nielsen, Jacob Blach, 7442 Engesvang (DK)
(74) Representative: Aspacher, Karl-Georg

(56) References cited:
- EP-A1- 2 169 814
- WO-A2-2006/032969
- WO-A2-2009/140954
- US-A1- 2007 193 014
- US-A1- 2011 043 065
- US-B1- 6 481 090

## Description

The invention describes a method and an arrangement for the exchange of a segment in an electric machine.

Electrical machines comprise a rotor and a stator. When a defect occurs in the stator of an electrical machine, the machine must be dismantled and the stator must be exchanged or repaired.

For bigger machines it is therefore known to build the stator as segmented stator. Several stator segments are arranged to build the stator-structure of the electric machine. In the case of a fault in one of the stator segments only the fault stator segment is exchanged.

Electrical machines are sometimes built as outer rotor machines. The stator is the inner part of the machine and the rotor rotates around the stator. In the case of an outer rotor machine it is not possible to exchange a stator segment in radial direction. Thus the rotor that is covering the stator has to be dismantled.

It is known from the prior art to exchange stator segments in axial direction. In this case the rotor doesn't have to be dismantled to exchange a stator segment.

Methods and arrangements to exchange segments of a stator or of a rotor of an electric machine are described in EP 2 169 814 A1 and US 2011/0043065 A1.

Permanent magnets are often used in the rotor of electrical machines e.g. in generators for wind turbines. In the case of a permanent magnet rotor there is a magnetic force constantly present in the machine that is also acting on the stator and the stator segments.

As the stator segment is in normal operation mounted to the inner construction of the stator the magnetic force is not a problem. In the case of an exchange of a stator segment the stator segment is loosened and moved from its normal position. In this case the magnetic forces of the permanent magnets attract the stator segment towards them. This has the disadvantage that the stator segment and the permanent magnets might touch each other. Thus the stator segment damages the permanent magnets.

When an exchange stator segment is introduced into the machine, the stator segment is attracted by the permanent magnets. This has the disadvantage that it is difficult to avoid that the stator segment touches the permanent magnets and causes damage.

Another disadvantage is that it is difficult to place the stator segment at the right spot in the machine so that it can be connected to the inner part of the stator construction.

To avoid those problems heavy and reliable machinery has to be used. This machinery pulls the stator segment out of the machine or guides an exchange stator segment into the electric machine. The machinery overcomes the magnetic forces of the permanent magnets acting on the stator segment.

A very similar problem occurs, when the permanent magnets of an electric machine are mounted to a rotor segment that have to be mounted to or dismounted from the electric machine. In this case the magnetic force of the permanent magnets attracts the permanent magnets to the stator of the electric machine. This has the disadvantage to avoid that the permanent magnets of a rotor segment touch the stator of the electric machine and damage occurs.

Also in this case big and heavy machinery has to be used for the mounting and un-mounting of the segments. The use of such machinery is mostly limited to a workshop where a heavy machine can be placed and used.

Faults can occur in the normal operation environment of the electric machine, like in a machine house or on top of a wind turbine. Then it can be extremely difficult to use the special machinery for the exchange of a rotor or stator segment of the electric machine.

US2007/193014A1 discloses a method of installing a rotor assembly in a generator stator including rotor sections to a conveyor. The rotor assembly is moved into position within the stator by using the conveyor.

EP2169814A1 discloses a method for positioning a stator arrangement which may temporarily interlocked with a rotating part of the electric machine.

US2011/043065A1 discloses a method of installing and removing permanent magnets in / from a magnet holder of an electromechanical machine.

It is therefore the aim of the invention to provide a method and an arrangement to exchange a stator of an electric machine. Whereby the arrangement reliably avoids any contact between the rotor and the stator and thereby avoids damage to the machine without using big and heavy machinery.

This aim is reached by the features of claim 1. Preferred configurations of the invention are object of the dependent claims.

According to the invention an electrical machine is assembled or disassembled, which comprises a rotor and a stator. The stator and the rotor are arranged in relation to each other to achieve a predetermined air-gap between the rotor and the stator.

The electrical machine is assembled or disassembled whereby a distance-element is arranged in the air gap in a way that the rotor and the stator are contactless movable in relation to each other while the machine is assembled or disassembled. Preferably a sliding material is arranged as distance-element in the air gap. Thus the stator can slide along the distance-element while being moved in relation to each other. Thus no additional parts to allow the movement are necessary.

Preferably a non-magnetic distance-element is arranged within the air-gap, to enable the contactless assembly or disassembly of the stator, while the stator comprises permanent magnets, which interact with the rotor. Thus any interference between the permanent magnets of the stator and the distance-elements is prevented.

Preferably a non-magnetic distance-element is arranged within the air-gap, to enable the contactless assembly or disassembly of the stator, while the rotor comprises permanent magnets, which interact with the stator. Thus any interference between the permanent magnets of the rotor and the distance-elements is prevented.

Preferably a flexible distance-element is arranged in the air-gap. Thus the distance-element can be introduced into the electric machine more easily, as they can also be curved around a bend.

Preferably the distance-element arranged in the air gap comprises nylon. Thus nylon has very good properties as a sliding element.

According to the invention a number of segments are arranged to build up the stator-structure, where at least one segment is attached to or is removed from the stator by using the distance-element while the machine is assembled or disassembled. Thus not the whole stator has to be assembled or disassembled in one step. Furthermore, in the case of a fault in the stator only the fault segment has to be exchanged.

According to the invention at least segments of the stator are attached to or are removed from the generator. The segments are attached to the generator from the direction of the hub or are removed in the direction to the hub. Thus the generator is easy accessible from the hub side. Thus the segment can easily be rotated together with the hub to the hoisted by a crane.

In case of the exchange of a stator segment in a generator with an outer rotor the opening can be in the side of the rotor. The rotor can be rotated so that the hatch is in front of the faulty stator segment. The hatch can then be opened and the segment can be exchanged through the opening.

As the segment is exchanged into the direction of the hub a support structure is temporarily fixed to the hub to support the detached segment. The segment is then moved out of the generator through the hatch onto the supporting structure.

When the segment is pulled out of the hatch it rests on the support structure at the hub. The hub can then be rotated to bring the support structure with the segment in a predetermined position. This can be a position, where it is possible to reach the segment with an internal crane system or with a hoist arranged to lower the segment to the ground or to a vessel.

Preferably a defect segment is removed out of its structure by turning the defect segment towards an opening of the electrical machine. Then at least one distance-element is inserted in the air gap, and the defect segment is dismounted from the remaining structure. Thus a single segment of the electric machine can be exchanged. Thus not the whole generator has to be exchanged and transported. Thus less gear is needed to exchange faulty parts. Furthermore a segment easily fits through the opening. Thus the machine doesn't have to be opened completely. The opening can be a man-hole for service, a mounting hole or a constructional opening planned to save material and weight.

According to the invention the generator of a wind turbine, preferably of a direct driven wind turbine, is assembled or disassembled. Thus the generator can be fixed on site in the case of a fault. A direct drive generator of a wind turbine can not be exchanged as easily as a generator of a geared wind turbine. Thus the hub has to be un-mounted to exchange the generator as a whole. A direct driven generator is bigger in dimensions and the transport of the generator as a whole can be very difficult and expensive. Thus extensive work for the exchange of the generator and the transport of the generator can be avoided.

According to the invention at least segments of the stator are attached to or removed from the generator. Most preferably the hub is turned from a first position, in which the segment can be attached or removed, into a second position, in which the segment can be lowered or can be lifted with a hoist system. Thus the segment can be brought in the right position to be hoisted with a hoist system. Thus the segment can be brought in the suitable position by rotation of the hub an internal hoist system can be used. Thus there is no need for an external crane or a crane vessel.

According to the invention the distance-element is prepared to be arranged in an air gap between a rotor and a stator of an electrical machine. The distance-element is arranged and designed in a way, that the rotor and the stator of an electrical machine are contactless movable in relation to each other while the machine is assembled or disassembled. Thus the distance-element provides a predetermined distance between the rotor and the stator. Thus damages due to an accidental contact between the rotor and the stator can be avoided while the rotor and the stator are moved relative to each other.

The use of the distance-elements as described in the inventive method above allows exchanging a defect segment of a generator. The segment is a segment of the stator. Thus in the case of a fault in the generator there is no need to exchange the whole generator. Especially in the case of a direct driven generator of a wind turbine this exchange and the transport of the generator can be very extensive and difficult, time intensive and expensive.

A segment of the generator can easily be exchanged through an opening in the generator. The opening can be closed by a hatch. This opening can either be in the hub side of the generator or in the side pointing away from the hub.

The distance-element is introduced into the generator so that it can provide a predetermined distance between the stator and the rotor. The faulty segment that is normally detachably fixed to the stator is detached from the construction to be moved.

In the case of a generator equipped with permanent magnets, the segment will be attracted by the force of the magnets towards other parts of the generator. The distance-element prohibits the accidental contact between parts of the rotor and parts of the stator. The detached segment is then attracted towards the distance-element and is resting on the surface of the distance-element.

As the segment is exchanged into the direction of the hub a support structure is temporarily fixed to the hub to support the detached segment. The segment is then moved out of the generator through the hatch onto the supporting structure. When it is moved, the segment slides along the surface of the distance-element. It is advantageous when the distance-element is of such a material that it shows good properties for the segment to slide on it. The material can be for example nylon.

An exchange segment can be introduced into the machine with the help of the tools and method described above. The segment is placed in the support structure for example by the help of a crane. The hub including the support structure is then rotated into the predetermined position, where the segment can be moved from the support structure through the opening into the generator. The distance-elements are present in the generator to prevent an accidental contact between the segment and the rest of the generator. The segment is then fastened in the generator and the distance-elements are removed from the electrical machine.

The invention is shown in more detail by help of figures. The figures show a preferred configuration and do not limit the scope of the invention.
- FIG 1: shows an axial cut through a direct driven generator with an outer rotor as used in a wind turbine,
- FIG 2: shows a cut through the direct driven permanent magnet generator,
- FIG 3: shows the exchange of the stator segment,
- FIG 4: shows a front view of the wind turbine,
- FIG 5: shows another front view of the wind turbine,
- FIG 6: shows one possibility to hoist the stator segment,
- FIG 7: shows the exchange of a stator segment by the help of a crane system

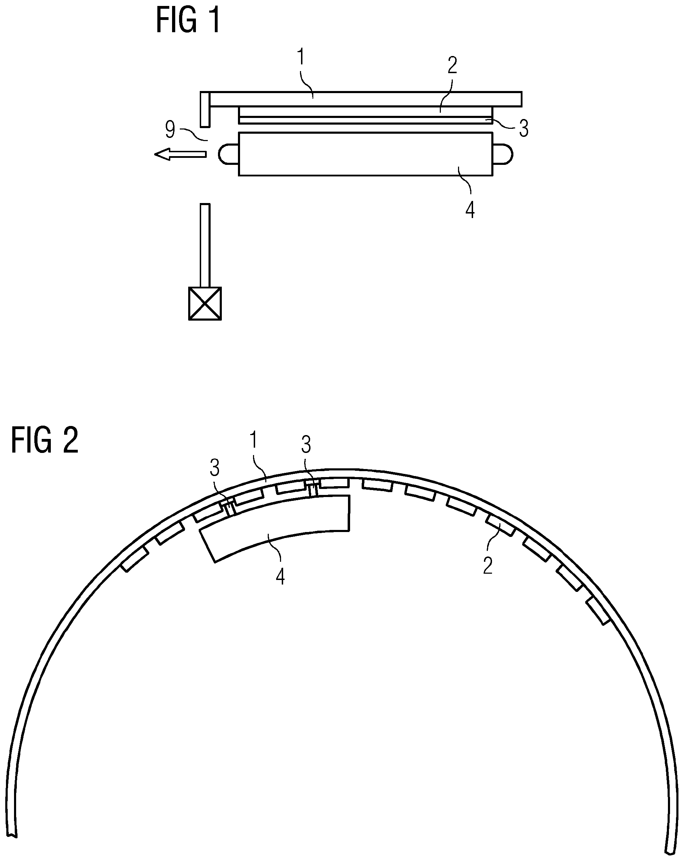

FIG 1 shows an axial cut through a direct driven generator with an outer rotor as used in a wind turbine. The rotor 1 is on its inner side equipped with permanent magnets 2. Within the rotor a segment of the stator 4 is shown. The rotor 1 comprises an opening 9 in the front plate. In the case of a defect in the stator segment 4 of the generator the segment can be exchanged through the opening 9 axially in the direction to the hub of the wind turbine. For this the rotor 1 is turned so that the opening 9 is in front of the faulty stator segment 4.

Slide strips 3 are used as distance-elements and are introduced or arranged between the rotor 1 and the stator segment 4 in the air gap of the generator. The stator segment 4 can then be moved along the slide strips 3 through the opening 9 out of the rotor 1 in the direction of the arrow.

FIG 2 shows a cut through the direct driven permanent magnet generator with an outer rotor. The permanent magnets 2 are arranged on the inner side of the rotor 1. One stator segment 4 is shown in the rotor 1. Between the rotor 1 and the stator segment 4 the sliding strips 3 are arranged. These strips are introduced in the air-gap of the generator. They guarantee a minimum distance between the stator segment 4 and the permanent magnets 2 while the stator segment 4 is exchanged.

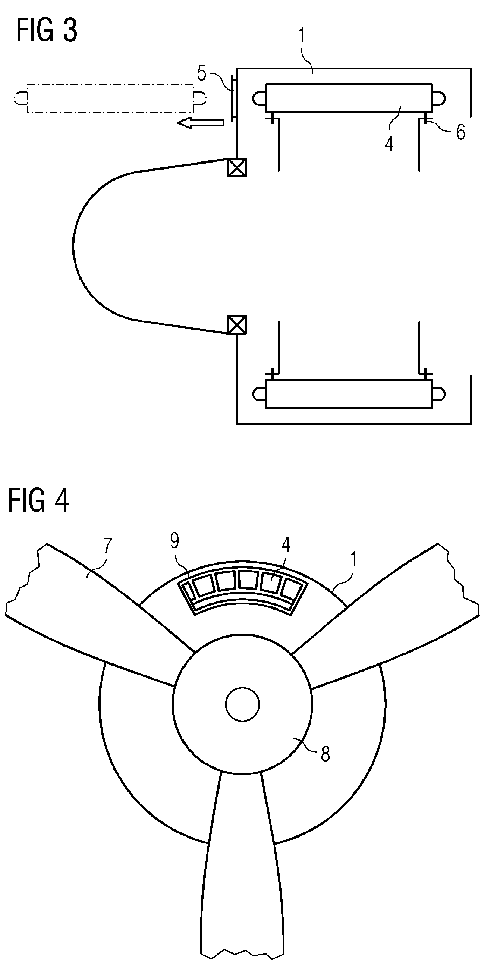

FIG 3 shows the exchange of the stator segment 4. The stator segment 4 is attached to the stator with bolts 6, in this case the bolts are arranged in radial direction. After the sliding strips (not shown) are arranged between the rotor 1 and the stator segment 4 the bolts 6 of the stator segment 4 are removed. The stator segment is then attached to the sliding strips by the magnetic force of the permanent magnets that are mounted to the rotor. The sliding strips guarantee a minimum distance between the rotor 1 and the stator segment 4.

The stator segment 4 is then sled along the sliding strips axially through an opening in the rotor that is normally covered with a hatch 5 in the direction of the arrow in the direction to the hub.

FIG 4 shows a front view of the wind turbine with the hub 8 and the blades 7. The hatch covering the opening in the rotor 9 is removed and the stator segments 4 can be seen in the rotor 1 through the opening 9.

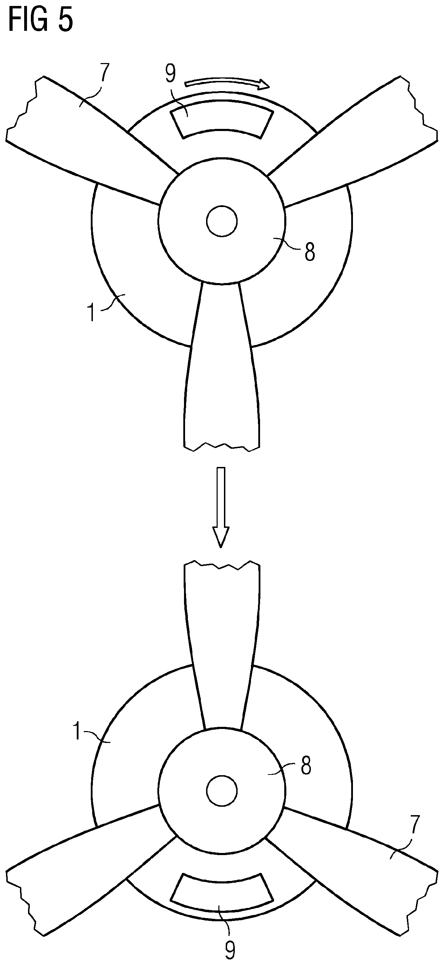

FIG 5 shows the front view of the wind turbine with the hub 8 and the blades 7. After the stator segment is moved out of the stator and the rotor 1 through the opening 9 in the rotor, the rotor 1 of the wind turbine is rotated in the right position to lift the stator segment to the ground by the help of a crane or hoist system.

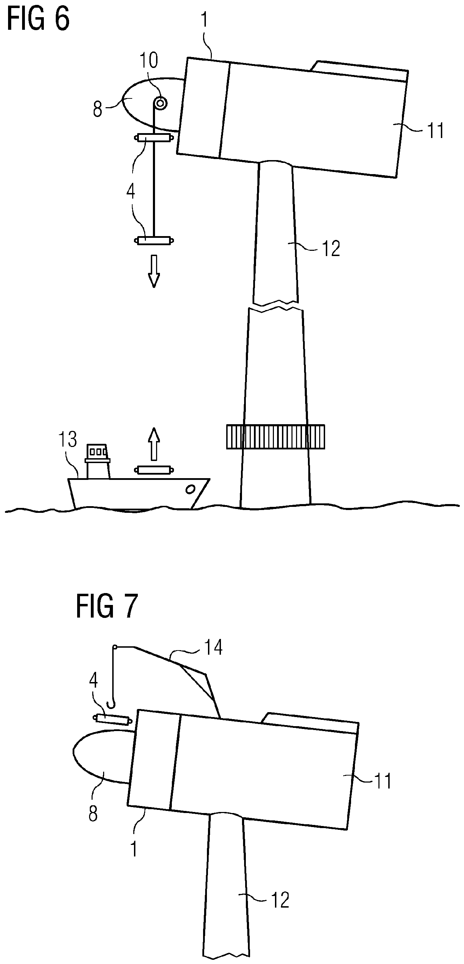

FIG 6 shows one possibility to lower the stator segment to the ground or to a vessel and hoist up a exchange stator segment to be installed in the generator.

This figure shows a wind turbine with a nacelle 11 and a hub 8 on a tower 12 in this case in an offshore installation situation. The blades of the wind turbine are not shown. After the rotor 1 is turned in the right position, the stator segment 4 is lowered to a vessel 13 by the use of an internal hoist system 10 that is mounted in the hub 8 or in the nacelle 11 or the tower 12 whereby the wire of the hoist system is guided into the hub 8 and through the hub by the help of a pulley. The exchange stator segment is then lifted up from the vessel by the help of the hoist system 10 to the hub 8 of the wind turbine.

FIG 7 shows the exchange of a stator segment 4 by the help of a crane system. The figure shows a wind turbine nacelle 11 on top of a tower 12. On the front end of the wind turbine is the generator with its rotor 1 and the hub 8. The blades of the wind turbine are not shown. The stator segment 4 is moved out of the generator and is resting in a support structure (not shown). The rotor is then moved into the right position to lift the stator segment 4 with the help of a crane 14. This crane 14 can be an internal crane mounted in the nacelle 11 that is pointing out of the nacelle 11 through an open hatch in the roof or it can be an external crane that is mounted on the nacelle 11 for maintenance reasons. The stator segment 4 is then lifted with the help of the crane 14 and lowered to the ground or a vessel. A new stator segment can thereafter be lifted up to the hub by the use of the crane 14.

## Claims

1. Method to assemble or disassemble a generator of a wind turbine, which comprises a rotor (1) and a stator (4),
- where the stator (4) and the rotor (1) are arranged in relation to each other to achieve a predetermined air-gap between the rotor (1) and the stator (4),
- where a distance-element (3) is arranged in the air gap in a way that the rotor (1) and the stator (4) are contactless movable in relation to each other while the machine is assembled or disassembled.
- where a number of segments (4) are arranged to build up the stator-structure, where at least one segment (4) is attached to or is removed from the stator by using the distance-element (3) while the machine is assembled or disassembled,
**characterized in that**
- at least segments of the stator (4) are attached to or are removed from the generator, whereby the segments are attached to the generator from the direction of the hub (8) or are removed in the direction to the hub (8),
- the opening (9) is closed by a hatch,
- the rotor (1) is rotated so that the hatch is in front of the faulty stator segment (4),
- the hatch is opened and the segment can be exchanged through the opening (9)
- a support structure is temporarily fixed to the hub to support the detached segment and
- the segment is then moved out of the generator through the hatch onto the supporting structure
- the segment is pulled out of the hatch and rests on the support structure at the hub, and
- the hub is then rotated to bring the support structure with the segment in a predetermined position to reach the segment with an internal crane system or with a hoist arranged to lower the segment to the ground or to a vessel.

2. Method according to claim 1,
- where a defect segment is removed out of its structure by turning the defect segment towards an opening (9) of the electrical machine,
- where at least one distance-element (3) is inserted in the air gap,
- where the defect segment is dismounted from the remaining structure.

3. Method according to claim 2, where at least segments the stator (4) are attached to or removed from the generator, where the hub (8) is turned from a first position, in which the segment can be attached or removed, into a second position, in which the segment can be lowered or can be lifted with a hoist system (10).

4. Method according to claim 1, where a sliding material is arranged as distance-element (3) in the air gap.

5. Method according to claim 4, where a non-magnetic distance-element (3) is arranged within the air-gap, to enable the contactless assembly or disassembly of the stator (4), while the stator (4) comprises permanent magnets (2), which interact with the rotor (1).

6. Method according to claim 4, where a non-magnetic distance-element (3) is arranged within the air-gap, to enable the contactless assembly or disassembly of the stator (4), while the rotor (1) comprises permanent magnets (2), which interact with the stator (4).

7. Method according to claim 5 and 6 where a flexible distance-element (3) is arranged in the air-gap.

8. Method according to claim 4 or claim 7 where the distance-element (3) arranged in the air gap comprises nylon.

## Patentansprüche

1. Verfahren zum Montieren oder Demontieren eines Generators einer Windturbine, der einen Rotor (1) und einen Stator (4) umfasst,
- wobei der Stator (4) und der Rotor (1) in Beziehung zueinander angeordnet sind, um einen vorgegebenen Luftspalt zwischen dem Rotor (1) und dem Stator (4) zu erreichen,
- wobei ein Distanzelement (3) in dem Luftspalt derartig angeordnet ist, dass der Rotor (1) und der Stator (4) in Beziehung zueinander berührungslos bewegbar sind, während die Maschine montiert oder demontiert wird,
- wobei eine Anzahl von Segmenten (4) angeordnet sind, um die Statorstruktur aufzubauen, wobei mindestens ein Segment (4) unter Verwendung des Distanzelements (3) am Stator angebracht oder von diesem entfernt wird, während die Maschine montiert oder demontiert wird,
**dadurch gekennzeichnet, dass**
- mindestens Segmente des Stators (4) am Generator angebracht oder von diesem entfernt werden, wobei die Segmente aus Richtung der Nabe (8) am Generator angebracht oder in Richtung der Nabe (8) von diesem entfernt werden,
- die Öffnung (9) durch eine Klappe verschlossen wird,
- der Rotor (1) so gedreht wird, dass sich die Klappe vor dem defekten Statorsegment (4) befindet,
- die Klappe geöffnet wird und das Segment durch die Öffnung (9) ausgetauscht werden kann,
- eine Tragstruktur vorübergehend an der Nabe angebracht wird, um das losgelöste Segment zu tragen, und
- das Segment anschließend durch die Klappe aus dem Generator heraus auf die Tragstruktur bewegt wird,
- das Segment aus der Klappe gezogen und auf der Tagstruktur an der Nabe abgelegt wird, und
- die Nabe anschließend gedreht wird, um die Tragstruktur mit dem Segment in eine vorgegebene Position zu bringen, um das Segment mit einem internen Kransystem oder einem Hebezeug zu erreichen, das eingerichtet ist, um das Segment auf den Erdboden oder ein Schiff abzusenken.

2. Verfahren nach Anspruch 1,
- wobei ein defektes Segment aus seiner Struktur entfernt wird, indem das defekte Segment zu einer Öffnung (9) der elektrischen Maschine gedreht wird,
- wobei mindestens ein Distanzelement (3) in den Luftspalt eingeführt wird,
- wobei das defekte Segment von der übrigen Struktur demontiert wird.

3. Verfahren nach Anspruch 2, wobei mindestens Segmente des Stators (4) an dem Generator angebracht oder von diesem entfernt werden, wobei die Nabe (8) von einer ersten Position, in der das Segment angebracht oder entfernt werden kann, in eine zweite Position gedreht wird, in der das Segment mit einem Hebesystem (10) abgesenkt oder angehoben werden kann.

4. Verfahren nach Anspruch 1, wobei ein Gleitmaterial als Distanzelement (3) in dem Luftspalt angeordnet ist.

5. Verfahren nach Anspruch 4, wobei ein nichtmagnetisches Distanzelement (3) in dem Luftspalt angeordnet ist, um die berührungslose Montage oder Demontage des Stators (4) zu ermöglichen, wobei der Stator (4) Dauermagneten (2) umfasst, die mit dem Rotor (1) zusammenwirken.

6. Verfahren nach Anspruch 4, wobei ein nichtmagnetisches Distanzelement (3) in dem Luftspalt angeordnet ist, um die berührungslose Montage oder Demontage des Stators (4) zu ermöglichen, wobei der Rotor (1) Dauermagneten (2) umfasst, die mit dem Stator (4) zusammenwirken.

7. Verfahren nach Anspruch 5 und 6, wobei ein flexibles Distanzelement (3) in dem Luftspalt angeordnet ist.

8. Verfahren nach Anspruch 4 oder Anspruch 7, wobei das in dem Luftspalt angeordnete Distanzelement (3) Nylon umfasst.

## Revendications

1. Procédé d'assemblage ou de désassemblage d'un générateur d'une éolienne, qui comprend un rotor (1) et un stator (4),
- où le stator (4) et le rotor (1) sont agencés en relation l'un par rapport à l'autre pour réaliser un intervalle d'air prédéterminé entre le rotor (1) et le stator (4),
- où un élément de distance (3) est agencé dans l'intervalle d'air de telle manière que le rotor (1) et le stator (4) sont mobiles sans contact en relation l'un par rapport à l'autre tandis que la machine est assemblée ou désassemblée,
- où un nombre de segments (4) sont agencés pour constituer la structure de stator, où au moins un segment (4) est fixé au ou est déposé du stator en utilisant l'élément de distance (3) tandis que la machine est assemblée ou désassemblée,
**caractérisé en ce que**
- au moins des segments du stator (4) sont fixés au ou sont déposés du générateur, d'où il résulte que les segments sont fixés au générateur dans une direction s'écartant du moyeu (8) ou sont déposés dans une direction vers le moyeu (8),
- l'ouverture (9) est fermée par une trappe,
- le rotor (1) est tourné de telle manière que la trappe est en face du segment de stator (4) défectueux,
- la trappe est ouverte et le segment peut être changé à travers l'ouverture (9),
- une structure support est temporairement fixée au moyeu pour supporter le segment détaché et
- le segment est ensuite sorti du générateur à travers la trappe jusque sur la structure support,
- le segment est tiré hors de la trappe et repose sur la structure support au niveau du moyeu, et
- le moyeu est ensuite tourné pour amener la structure support avec le segment dans une position prédéterminée pour atteindre le segment avec un système de grue interne ou avec un dispositif de levage agencé de façon à abaisser le segment jusqu'au sol ou jusqu'à un navire.

2. Procédé selon la revendication 1,
- où un segment défectueux est sorti de sa structure en tournant le segment défectueux vers une ouverture (9) de la machine électrique,
- où au moins un élément de distance (3) est inséré dans l'intervalle d'air,
- où le segment défectueux est démonté de la structure restante.

3. Procédé selon la revendication 2, où au moins des segments du stator (4) sont fixés au ou déposés du générateur, où le moyeu (8) est tourné d'une première position, dans laquelle le segment peut être fixé ou déposé, à une deuxième position, dans laquelle le segment peut être abaissé ou peut être hissé avec un système de levage (10).

4. Procédé selon la revendication 1, où un matériau glissant est agencé comme élément de distance (3) dans l'intervalle d'air.

5. Procédé selon la revendication 4, où un élément de distance (3) non magnétique est agencé à l'intérieur de l'intervalle d'air, pour permettre l'assemblage ou le désassemblage sans contact du stator (4), tandis que le stator (4) comprend des aimants permanents (2), qui interagissent avec le rotor (1).

6. Procédé selon la revendication 4, où un élément de distance (3) non magnétique est agencé à l'intérieur de l'intervalle d'air, pour permettre l'assemblage ou le désassemblage sans contact du stator (4), tandis que le rotor (1) comprend des aimants permanents (2), qui interagissent avec le stator (4).

7. Procédé selon la revendication 5 et 6, où un élément de distance (3) flexible est agencé dans l'intervalle d'air.

8. Procédé selon la revendication 4 ou la revendication 7, où l'élément de distance (3) agencé dans l'intervalle d'air comprend du nylon.
